# EUROPÄISCHE PATENTSCHRIFT

(11) **EP 0 696 914 B1**
(45) Veröffentlichungstag und Bekanntmachung des Hinweises auf die Patenterteilung: **17.10.2001**
(21) Anmeldenummer: 95909649.6
(22) Anmeldetag: 25.02.1995
(51) Int. Cl.: A61H 33/02, A61H 33/00

(54) **WHIRLPOOL- ODER SWIMMINGPOOL-EINSTRÖMHOHLLEISTE**
HOLLOW INLET MOULDING FOR A WHIRLPOOL OR SWIMMING POOL
PROFILE CREUX D'ADMISSION POUR BAIN HYDROMASSEUR OU PISCINE

(30) Priorität: 02.03.1994 DE 9403460 U
(43) Veröffentlichungstag der Anmeldung: 21.02.1996
(73) Patentinhaber: Schydlo, Martin T., D-40885 Ratingen (DE)
(72) Erfinder: Schydlo, Martin T., D-40885 Ratingen (DE)
(74) Vertreter: Vomberg, Friedhelm, Dipl.-Phys.
(86) Internationale Anmeldenummer: DE9500250
(87) Internationale Veröffentlichungsnummer: WO9523575

(56) Entgegenhaltungen:
- EP-A- 0 450 396
- DE-C- 3 941 819
- US-A- 5 245 221

## Beschreibung

Die Erfindung betrifft eine Whirlpool- oder Swimmingpool-Einströmhohlleiste zur Erzeugung von Wasser-Luft-Gemischstrahlen in einer Flüssigkeit, mit einem Einströmkanal mit einer Vielzahl von Ausströmöffnungen entlang der Hohlleistenlänge, und mit einem Ansaugkanal, der einen die Whirl- oder Swimmingpoolwand durchragenden Stutzen zur Verbindung mit der Pumpe aufweist und der sich als Teil des einstückigen Einströmleistenmantelkörpers über die gesamte Hohlleistenlänge erstreckt und von dem Einströmkanal durch eine gemeinsame Wand getrennt ist, wobei der ansonsten geschlossene Ansaugkanal eine Mehrzahl von in der Hohlleiste angeordneten Fluideinströmöffnungen aufweist.

Eine solche Whirlpool- oder Swimmingpool-Einströmhohlleiste wird in den Unterlagen der EP 0 450 396 A1 beschrieben. Die dortige kanalartige Leiste besitzt einen Boden sowie im wesentlichen senkrecht davon nach oben abstehende Seitenwände sowie eine mit Öffnung versehene Abdeckung, welche die seitlichen Wände der Leiste überragen. Durch die die Leistenfläche überragenden Abdeckungsteile kann das Wasser nach unten abströmen, wo es über eine Rinne bzw. den Wannengrund in einen Abfluß abströmen soll, in dessen Ablauf ggf. eine Pumpe angeordnet sein kann.

Aus der DE 39 41 819 C1 ist eine solche Einströmvorrichtung bekannt, bei der die Fertigung und der Einbau der Düsen und der Düsenanschlüsse vereinfacht und die Düsenanordnung ohne Umbau des Flüssigkeitsbehälters von Benutzung zu Benutzung variiert werden kann, indem die Leitung durch einen Durchbruch in der Wand des Behälters geführt ist und am Eintrittsende in dem Behälter aus einem Winkelrohr mit einem im Behälter liegenden Rohrende besteht, wobei die Hohlleiste über Schnapp-, Klemm- oder Steckverbindung mit dem Rohrende lösbar verbunden ist.

Bei dieser Art von Einströmvorrichtungen besteht der Nachteil, daß die Luft, das Wasser oder das Luft-Wasser-Gemisch über ein und denselben Einlaßstutzen geführt werden müssen, somit außerhalb der Hohlleiste im Whirlpool oder Schwimmbecken zusätzliche Ansaugöffnungen zum Abpumpen und Wiederzuführen des Wassers vorgesehen sein müssen.

Es ist Aufgabe der vorliegenden Erfindung, diese zusätzlichen Ansaugöffnungen im Whirlpool oder Schwimmbad zu vermeiden.

Diese Aufgabe wird durch die im Anspruch 1 beschriebene Whirlpool- oder Swimmingpool-Einströmhohlleiste gelöst. Hiermit wird nicht nur der bauliche Aufwand der Vorrichtung erheblich minimiert, sondern auch auf einfache Weise vermieden, daß eine Saugwirkung bzw. ein Unterdruck auf nicht unter der Wasseroberfläche liegende Düsen ausgeübt wird. Durch die an der Einströmhohlleiste nebeneinander angeordneten Ausströmöffnungen und Einströmöffnungen entsteht eine gewünschte turbulente Bewegung der Flüssigkeit. Weiterhin erstreckt sich der Ansaugkanal über die gesamte Hohlleistenlänge. Hiermit wird erreicht, daß die Flüssigkeit gleichmäßig im Bereich der Einströmhohlleiste abgezogen und rezirkulierend wieder zugeführt wird. Die Einströmleiste weist erfindungsgemäß ferner einen Luftkanal auf, der sich über die gesamte Hohlleistenlänge erstreckt. Durch diese Maßnahme werden das angesaugte Wasser, das unter Druck stehende auszupumpende Wasser sowie die Luft zur Herstellung der Gemischstrahlen in eine Leiste geführt. Schließlich sind in der gemeinsamen Wand zwischen dem Luftkanal und dem Einströmkanal Durchbrechungen zumindest im Bereich der Ausströmöffnungen vorgesehen, durch die die Luft zur Bildung des sprudelnden Luft-Wasser-Gemisches erst in unmittelbarer Nähe der Ausströmöffnungen in den Druckwasserstrom eintritt.

Wie auch im Falle der prinzipiell aus der DE 39 41 819 C1 bekannten Einströmleiste besitzt auch die vorliegende Weiterentwicklung einen die Whirlpool- oder Swimmingpoolwand durchragenden Stutzen des Ansaugkanals zur Verbindung mit einer Pumpe außerhalb des Whirlpool- oder Swimmingpoolbeckens.

Vorteilhafte Weiterbildungen der Einströmhohlleiste sind in den Unteransprüchen 2 bis 8 beschrieben.

Vorzugsweise hat der Ansaugkanal eine größere Anzahl von Fluid-Einströmöffnungen als Ausströmöffnungen, wobei vorzugsweise der Querschnitt der Fluid-Einströmöffnungen kleiner als der der Ausströmöffnungen ist. Hierdurch kann erreicht werden, daß die Gesamtförderleistung durch die Einströmöffnungen genauso groß wie die durch die Ausströmöffnungen pro Zeiteinheit ist.

Weiterhin besitzen der Einströmkanal, der Luftkanal und der Ansaugkanal einen die Whirlpool- oder Swimmingpoolwand durchragenden Stutzen, wobei die Stutzen nebeneinander quer zur Längsachse angeordnet sind, weshalb die Hohlleiste im wesentlichen nur an einer Stelle mit der Whirlpoolwand befestigt ist.

Vorzugsweise ist die Hohlleiste im Querschnitt (senkrecht zu ihrer Längsachse) symmetrisch aufgebaut und besitzt einen mittleren Einströmkanal sowie beidseitig hiervon den Ansaug- und den Luftstromkanal.

Zur Ausleuchtung von Whirlpools dienen nach dem Stand der Technik in den Wannenboden oder die Seitenwand eingelassene Lichtstrahler. Bekannt sind auch lichttransparente Wannen, die von außen angestrahlt bzw. durchstrahlt werden. Im Schwimmbadbereich verwendet man u.a. Unterwasserscheinwerfer. Diese Be- und Ausleuchtung wird häufig als kalt empfunden. Um hier Abhilfe zu schaffen, wird nach einer weiteren Ausgestaltung der Erfindung vorgeschlagen, daß auf mindestens eine Ausströmöffnung eine in die Hohlleiste ragende Lichtquelle gerichtet ist. Hierdurch wird erreicht, daß der ausströmende Wasserstrom die eingeführten Lichtwellen bis in das Wannen- oder Poolbecken weiterleitet, wobei durch die Wasser-Luft-Gemischeinströmung in Verbindung mit den auftretenden Blasenbildungen und Strömungsturbulenzen Lichtreflektionen auftreten, die als angenehm empfunden werden. Diese Lichtreflektionen rühren zum Teil von partiellen, zum Teil auch von totalen Reflektionen her, je nach dem, ob der flüssigkeitsspezifische Grenzwinkel überschritten wird oder nicht. Durch diese optische eigenschaft erscheinen beispielsweise Luftblasen im Wasser wie silberglänzende Perlen. Dies läßt sich im wesentlichen jedoch nur erreichen, wenn die Lichtstrahlen nicht unmittelbar von der Lichtquelle ausgehend in das Wasser gelangen, sondern über das einströmende Wasser als "Transportmedium".

Nach einer Weiterbildung der Erfindung wird als Lichtquelle ein angestrahlter Lichtleiter verwendet, vorzugsweise aus einem flexiblen Bündel von Lichtleitfasern. Lichtleitfasern bestehen aus dünnen Faern mit geringem Durchmesser von einigen Mikrometer bis hin zu 1 mm und können deshalb als Lichtleiter verwendet werden, weil das hierin eingestrahlte Licht an dem Fasermantel jeweils eine Totalreflektion erleidet.

Der Vorteil dieser Fasern liegt insbesondere in ihrer Flexibilität. Die Lichtleitfasern oder Bündel von Lichtleitfasern werden an einer Stirnseite von einer Lichtquelle angestrahlt, das Licht tritt dann an dem anderen Ende, das in der Nähe der Austrittsöffnung der Einströmvorrichtung liegt, aus, von wo ab das Wasser den "Lichttransport" übernimmt.

Nach einer weiteren Ausgestaltung der Erfindung kann die Hohlleiste transparent sein, vorzugsweise aus Acrylglas bestehen, so daß bereits die in dem Hohlleisteninnenraum auftretenden Lichterscheinungen beobachtet werden können.

Wie in der DE 39 41 819 C1 beschrieben, kann aus konstruktiven Gründen, aber auch um die Einströmhohlleiste möglichst störungsfrei für den Benutzer anordnen zu können, die Hohlleiste im Betrieb im Bereich und parallel zur Innenwand des Whirlpools oder Swimmingpools angeordnet und zum leichten Lösen und Befestigen über eine Schnapp-, Klemm- oder Steckverbindung mit mindestens einem die Whirlpool- oder Swimmingpoolwand durchragenden Anschlußstutzen mit einer außerhalb des Whirlpools oder der Wanne liegenden Pumpe verbunden werden.Das aus dem Durchbruch in der Wand des Whirl- oder Swimmingpools ragende Rohrende kann z.B. als 90°-Winkelrohr, als T-Stück oder als Kreuzstück mit einem Ansatzstutzen ausgebildet sein. Beispielsweise ist die Hohlleiste starr oder flexibel und im Querschnitt länglich-oval mit ebener Bodenfläche, aber flach ausgebildet, so daß sie eine bei der Benutzung nicht störende Rippe im Whirl- oder Swimmingpoolboden oder an der Beckeninnenseite darstellt.

Um zu verhindern, daß sich die Hohlleiste bei Benutzung ungewollt verschiebt, ist entsprechend der aus DE 39 41 819 C1 bekannten Anordnung die im wesentlichen ebene Oberfläche des Hohlleistenbodens mit flexiblen Haftsäumen ausgestattet, worüber sie an der Beckenwand oder am Beckenboden lösbar fixiert werden kann. Die Ausströmöffnugnen befinden sich auf der Leistenoberseite, vorzugsweise sind sie mittig und/oder äquidistant angeordnet, wobei die Fluideinströmöffnungen seitlich und parallel zur Mittellängsachse angeordnet sind.

Nach einer weiteren Ausgestaltung der Erfindung ist die Lichtquelle in der Helligkeit und/oder in der Lichtfarbe (Lichtwellenlänge) regelbar. Letzeres kann auch über Lichtfilter erzielt werden, die nur einen bestimmten Wellenlängenbereich des optisch sichtbaren Lichtes durchlassen. Im Bereich der vorliegenden Erfindung liegen auch wechselnde Farbmischungen des eingestrahlten Lichtes.

Schließlich kann auch eine Lichtquelle verwendet werden, die über mehrere Lichtleitfaserbündel Licht zu verschiedenen Wasseraustrittsöffnungen weiterleitet.

Ausführungsbeispiele der Erfindung sind in den Zeichnungen dargestellt. Es zeigen
- Fig. 1: eine Seitansicht einer Einströmhohlleiste,
- Fig. 2: eine Draufsicht auf die Einströmhohlleiste nach Fig. 1 und
- Fig. 3, 4 und 5: jeweils Schnitte entlang der Linien A - A, B - B und C - C.

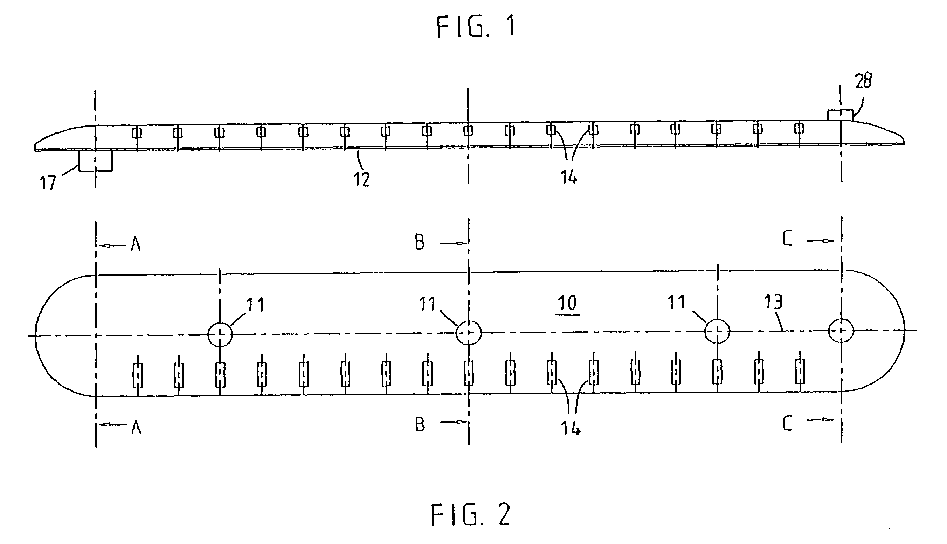

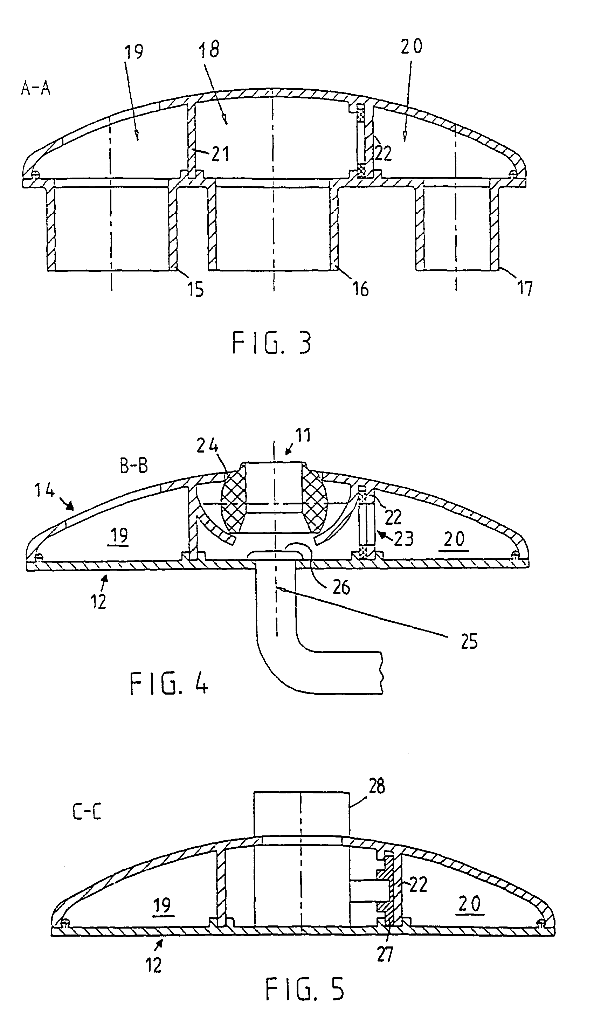

Die in Fig. 1 bis 4 dargestellte Hohlleiste besteht aus einem langgestreckten ovalen Flachkörper mit einem Hohlprofil, das Fig. 3 bis 5 näher zu entnehmen ist. Die Hohlleiste besitzt an ihrer Oberseite 10 mittig aufgereihte Ausströmöffnungen 11. Die Hohlleiste liegt auf dem flachen ebenen Boden 12 auf, wohingegen die Oberseite bogenförmig gewölbt ist. Zur Fixierung am Wannenboden kann die Hohlleiste unter ihrem Boden einen Haftsaum aus flexiblem elastischen Material besitzen, der auf den Wannenboden gelegt wird. Statt eines Saumes können auch Saugnoppen oder ähnliches verwendet werden. Neben den genannten Ausströmöffnungen 11 besitzt die Hohlleiste parallel zur Längsmittelachse 13 aneinandergereihte Fluideinströmöffnungen 14.

Wie aus Fig. 3 ersichtlich, dienen drei Stutzen 15, 16 und 17 als eine die Wannen- oder Beckenwand durchbrechende Befestigungsmöglichkeit für weitere Leitungen oder ähnliches.

Die Einströmhohlleiste ist entsprechend Fig. 3 dreiteilig aufgebaut und besitzt einen zentralen Einströmkanal 18, dem beidseitig ein Ansaugkanal 19 und ein Luftkanal 20 nebengeordnet sind. Jeder der genannten Kanäle 18, 19 und 20 ist über einen der genannten Stutzen 15, 16 und 17 mit jeweiligen Anschlüssen, insbesondere einer Pumpvorrichtung verbunden. Hierbei kann das über den Ansaugkanal 19 abgepumpe Wasser unmittelbar in den Einströmkanal und von hieraus über eine Ausströmöffnung 11 in den Whirlpool oder das Schwimmbecken geleitet werden. Die Einströmleiste trennt den Einströmkanal jeweils vom Ansaugkanal und den Luftkanal durch Zwischenwände 21 und 22, wobei die Zwischenwand 22 Durchbrechungen 23 etwa im Bereich der Ausströmöffnungen 11 aufweist (siehe Fig. 4). Die Ausströmöffnungen 11 sind über ein Kugelgelenk als bewegliche Einströmdüsen 24 ausgestaltet und besitzen die Form einer sogenannten Venturi-Düse. In Richtung dieser Ausströmöffnung 11 (siehe Fig. 4) mündet ein Lichtleiter 25 (ggf. ein Lichtleitfaserbündel), dessen Stirnseite 26 als Austrittsfläche des am anderen Ende eingestrahlten Lichtes dient. Diese Stirnseite ist zu der Düsenaustrittsöffnung 11 gerichtet. Die Lichtquelle ist nicht dargestellt.

Ferner ist noch eine Luftverstelleiste 27 vorgesehen, die über einen Verstellnocken 28 betätigt werden kann und mittels der die Luftzufuhr geregelt wird.

## Patentansprüche

1. Whirlpool- oder Swimmingpool-Einströmhohlleiste zur Erzeugung von Wasser-Luft-Gemischstrahlen in einer Flüssigkeit, mit einem Einströmkanal (18) mit einer Vielzahl von Ausströmöffnungen (11) entlang der Hohlleistenlänge, und mit einem Ansaugkanal, der einen die Whirl- oder Swimmingpoolwand durchragenden Stutzen (15) zur Verbindung mit einer Pumpe aufweist und der sich als Teil des einstückigen Einströmleistenmantelkörpers über die gesamte Hohlleistenlänge erstreckt und von dem Einströmkanal (18) durch eine gemeinsame Wand (21) getrennt ist, wobei der ansonsten geschlossene Ansaugkanal (19) eine Mehrzahl von in der Hohlleiste angeordneten Fluideinströmöffnungen (14) aufweist,
**dadurch gekennzeichnet,**
**daß** die Einströmleiste einen Luftkanal (20) aufweist, der sich über die gesamte Hohlleistenlänge erstreckt und daß in der gemeinsamen Wand zwischen dem Luftkanal (20) und dem Einströmkanal (18) zumindest im Bereich der Ausströmöffnungen (11) Durchbrechungen (23) vorgesehen sind.

2. Einströmhohlleiste nach Anspruch 1 dadurch gekenn-, zeichnet, daß der Ansaugkanal (19) eine größere Anzahl von Fluideinströmöffnungen (14) als Ausströmöffnungen (11) aufweist, wobei vorzugsweise der Querschnitt der Fluideinströmöffnungen (14) kleiner als der der Ausströmöffnungen (11) ist.

3. Einströmhohlleiste nach einem der Ansprüche 1 bis 2, **dadurch gekennzeichnet, daß** der Einströmkanal (18) und/oder der Luftkanal (20) einen die Whirlpool- oder Swimmingpoolwand durchragenden Stutzen (16, 17) aufweist/aufweisen, die vorzugsweise nebeneinander quer zur Längsachse (13) angeordnet sind.

4. Einströmhohlleiste nach einem der Ansprüche 1 bis 3, **dadurch gekennzeichnet, daß** die Hohlleiste im Querschnitt symmetrisch aufgebaut ist und vorzugsweise beidseitig des mittleren Einströmkanales (18) den Ansaugkanal (19) und den Luftkanal (20) aufweist.

5. Einströmhohlleiste nach einem der Ansprüche 1 bis 4, **dadurch gekennzeichnet, daß** auf mindestens eine Ausströmöffnung (11) eine in der Hohlleiste ragende Lichtquelle (25) gerichtet ist, die vorzugsweise ein angestrahlter Lichtleiter (25) ist, weiterhin vorzugsweise aus einem flexiblen Bündel aus Lichtleitfasern.

6. Einströmhohlleiste nach einem der Ansprüche 1 bis 5, **dadurch gekennzeichnet, daß** die Hohlleiste transparent ist, vorzugsweise aus Acrylglas besteht.

7. Einströmhohlleiste nach einem der Ansprüche 5 oder 6, **dadurch gekennzeichnet, daß** die Lichtquelle in der Helligkeit und/oder in der Lichtwellenlänge regelbar ist.

8. Einströmhohlleiste nach einem der Ansprüche 5 bis 7, **dadurch gekennzeichnet, daß** eine Lichtquelle (25) zur Lichteinstrahlung mit mehreren Lichtleitfaserbündeln verbunden ist, die zu verschiedenen Wasserausströmöffnungen (11) führen.

## Claims

1. Hollow inlet moulding for a whirlpool or swimming pool for producing streams of a water-air mixture in a liquid, with an inlet channel (18) with a plurality of outlet apertures (11) along the moulding length, and with a suction channel which has a connection piece extending through the wall of the whirlpool or the swimming pool for the connection with a pump and which as a part of the one-piece hollow inlet moulding body extends over the whole length of the hollow bar and which is separated from the inlet channel (18) by a common wall (21), whereby the apart from a plurality of fluid inlet apertures (14) arranged in the hollow bar suction channel (19) is sealed,
**characterized in that**
the inlet moulding comprises an air channel (20) extending over the whole length of the hollow bar and that at least in the area of the outlet apertures (11), apertures (23) are provided in the common wall between the air channel (20) and the inlet channel (18).

2. Hollow inlet moulding according to claim 1, **characterized in that** the suction channel (19) has a greater number of fluid inlet apertures (14) than outlet apertures (11), whereby preferably the cross section of the fluid inlet apertures (14) is smaller than the cross section of outlet apertures (11).

3. Hollow inlet moulding according to one of the claims 1 to 2, **characterized in that** the inlet channel (18) and/or the air channel (20) has connecting piece (16, 17) extending through the wall of the whirlpool or swimming pool and preferably being arranged side by side crosswise to the longitudinal axis (13).

4. Hollow inlet moulding according to one of the claims 1 to 3, **characterized in that** the hollow bar has a symmetrical cross section and that preferably the suction channel (19) and the air channel (20) are arranged on both sides of the intermediate inlet channel (18).

5. Hollow inlet moulding according to one of the claims 1 to 4, **characterized in that** a light source (25) extending into the hollow bar is directed to at least one of the outlet apertures (11), said light source being preferably an irradiated light guide (25), furthermore preferably consisting of a flexible fibers bundle of light guides.

6. Hollow inlet moulding according to one of the claims 1 to 5, **characterized in that** the hollow bar is transparent and consists preferably acrylic glass.

7. Hollow inlet moulding according to one of the claims 5 or 6, **characterized in that** the light source is controllable in the light intensity and/or in the light wave length.

8. Hollow inlet moulding according to one of the claims 5 to 7, **characterized in that** a light source (25) for the illumination is connected to several fibers bundles of light guides which guide to different water outlet apertures (11).

## Revendications

1. Profilé creux d'admission pour bains hydromasseurs ou piscines, destiné à produire des jets de mélange eau/air dans un liquide, avec un canal d'admission (18) ayant une pluralité d'ouvertures d'écoulement (11) le long de la longueur du profilé creux, et avec un canal d'aspiration qui présente une tubulure (15) s'étendant à travers la paroi du bain hydromasseur ou de la piscine et destinée à être reliée à une pompe, et qui, comme partie du corps enveloppe en une pièce du profilé d'admission, s'étend sur l'ensemble de la longueur du profilé creux et est séparé du canal d'admission (18) par une paroi commune (21), le canal d'aspiration (19) à part cela fermé présentant une pluralité d'ouvertures d'admission de fluide (14) disposées dans le profilé creux,
**caractérisé par le fait**
**que** le profilé d'admission présente un canal d'air (20) qui s'étend sur l'ensemble de la longueur du profilé creux et que des ouvertures (23) sont prévues dans la paroi commune entre le canal d'air (20) et le canal d'admission (18), au moins dans la zone des ouvertures d'écoulement (11).

2. Profilé creux d'admission selon la revendication 1, **caractérisé par le fait que** le canal d'aspiration (19) présente un nombre d'ouvertures d'admission de fluide (14) supérieur à celui des ouvertures d'écoulement (11), la section des ouvertures d'admission de fluide (14) étant de préférence plus petite que celle des ouvertures d'écoulement (11).

3. Profilé creux d'admission selon l'une des revendications 1 à 2, **caractérisé par le fait que** le canal d'admission (18) et/ou le canal d'air (20) présente(nt) une tubulure (16, 17) s'étendant à travers la paroi du bain hydromasseur ou de la piscine, qui sont disposées de préférence l'une à côté de l'autre transversalement à l'axe longitudinale (13).

4. Profilé creux d'admission selon l'une des revendications 1 à 3, **caractérisé par le fait que**, en coupe transversale, le profilé creux est construit symétriquement et qu'il présente de préférence de part et d'autre du canal d'admission (18) du milieu le canal d'aspiration (19) et le canal d'air (20).

5. Profilé creux d'admission selon l'une des revendications 1 à 4, **caractérisé par le fait que** sur au moins une ouverture d'écoulement (11) est dirigée une source de lumière (25) se projetant dans le profilé creux, qui, de préférence, est un guide de lumière (25) illuminé, en outre de préférence se compose d'un faisceau flexible de fibres optiques.

6. Profilé creux d'admission selon l'une des revendications 1 à 5, **caractérisé par le fait que** le profilé creux est transparent, se compose de préférence de verre acrylique.

7. Profilé creux d'admission selon l'une des revendications 5 ou 6, **caractérisé par le fait que** la source de lumière est réglable en luminosité et/ou en longueur d'ondes lumineuses.

8. Profilé creux d'admission selon l'une des revendications 5 à 7, **caractérisé par le fait que**, pour l'irradiation de lumière, une source de lumière (25) est reliée à plusieurs faisceaux de fibres optiques qui mènent à des ouvertures d'écoulement d'eau (11) différentes.
